# EUROPÄISCHE PATENTSCHRIFT

(11) **EP 2 573 210 B1**
(45) Veröffentlichungstag und Bekanntmachung des Hinweises auf die Patenterteilung: **26.10.2016**
(21) Anmeldenummer: 12185141.4
(22) Anmeldetag: 20.09.2012
(51) Int. Cl.: C25B 1/46, C25B 11/03, C25B 11/04, H01M 4/88, H01M 4/90

(54) **Sauerstoffverzehrelektrode und Verfahren zu ihrer Herstellung**
Oxygen-consuming electrode and method for its production
Electrode catalytique consommant de l'oxygène et son procédé de fabrication

(30) Priorität: 23.09.2011 DE 102011083321
(43) Veröffentlichungstag der Anmeldung: 27.03.2013
(73) Patentinhaber: Covestro Deutschland AG, 51373 Leverkusen (DE)
(72) Erfinder: Kintrup, Jürgen, 51373 Leverkusen (DE); Bulan, Andreas, 40764 Langenfeld (DE)
(74) Vertreter: Levpat

(56) Entgegenhaltungen:
- EP-A2- 1 728 896
- DE-C1- 3 125 892
- US-B2- 7 771 872

## Beschreibung

Die Erfindung betrifft ein Herstellungsverfahren für eine Sauerstoffverzehrelektrode, insbesondere für den Einsatz in der Chloralkali-Elektrolyse, mit einer Katalysatorbeschichtung auf Basis von Silber und eines feinteiligen Silberoxids.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zu Herstellung und Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden. Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 bis 90°C. Ebenso wird ein hohes Maß an mechanischer Stabilität gefordert, da die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Füssigkeitsraum voneinander getrennt bleiben. Die Langzeitstabilität und geringe Herstellkosten sind weitere besondere Anforderungen an eine technisch nutzbare Sauerstoffverzehrelektrode.

Eine Sauerstoffverzehrelektrode besteht typischerweise aus einem Trägerelement, zum Beispiel einer Platte aus porösem Metall oder Gewebe aus Metalldrähten, und einer elektrochemisch aktiven Beschichtung. Die elektrochemisch aktive Beschichtung ist mikroporös und besteht aus hydrophilen und hydrophoben Bestandteilen. Die hydrophoben Bestandteile erschweren das Eindringen von Elektrolyten und halten somit die entsprechenden Poren für den Transport des Sauerstoffs zu den katalytisch aktiven Zentren frei. Die hydrophilen Bestandteile ermöglichen das Eindringen des Elektrolyten zu den katalytisch aktiven Zentren und den Abtransport der Hydroxid-Ionen. Als hydrophobe Komponente wird in der Regel ein fluorhaltiges Polymer wie Polytetrafluorethylen (PTFE) eingesetzt, welches zudem als polymerer Binder des Katalysators dient. Bei Elektroden mit Silber-Katalysator dient das Silber als hydrophile Komponente. Bei kohlenstoffgeträgerten Katalysatoren wird als Träger ein Kohlenstoff mit hydrophilen Poren eingesetzt, durch welche der Flüssigkeitstransport erfolgen kann.

Die Reduktion des Sauerstoffs erfolgt in einem Dreiphasenbereich, in welchem Gasphase, Flüssigkeitsphase und fester Katalysator zusammentreffen.

Der Gastransport erfolgt durch die Poren in der hydrophoben Matrix. Die hydrophilen Poren füllen sich mit Flüssigkeit, über sie erfolgt der Transport des Wassers zu und der Hydroxid-Ionen von den katalytischen Zentren. Da sich Sauerstoff nur begrenzt in der wässrigen Phase löst, müssen genügend wasserfreie Poren zum Transport des Sauerstoffs zur Verfügung stehen.

Als Katalysator für die Reduktion von Sauerstoff sind eine Vielzahl von Verbindungen beschrieben.

So liegen Berichte über den Einsatz von Palladium, Ruthenium, Gold, Nickel, Oxiden und Sulfiden von Übergangsmetallen, Metall-Porphyrinen und Phthalocyaninen, und Perowskiten als Katalysator für Sauerstoffverzehrelektroden vor.

Praktische Bedeutung als Katalysator für die Reduktion von Sauerstoff in alkalischen Lösungen haben jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Ein bekanntes erprobtes Trägermaterial ist Kohlenstoff. Kohlenstoff leitet elektrischen Strom zu dem Platin-Katalysator. Die Poren in den Kohlenstoff-Partikeln lassen sich durch Oxidation der Kohlenstoffoberfläche hydrophil einstellen und werden hierdurch geeignet für den Transport von Wasser. Die Beständigkeit kohlenstoffgeträgerter Platinelektroden im Dauerbetrieb ist jedoch unzureichend, vermutlich, weil durch Platin auch die Oxidation des Trägermaterials katalysiert wird. Die Oxidation des Trägermaterials führt zum Verlust der mechanischen Stabilität der Elektrode.

Silber hat ebenfalls eine hohe katalytische Aktivität für die Reduktion von Sauerstoff.

Silber kann gemäß dem Stand der Technik auch mit Kohlenstoff als Träger und auch als feinteiliges metallisches Silber eingesetzt werden.

SVE mit kohlenstoffgeträgertem Silber weisen üblicherweise Silber-Konzentrationen von 20 - 50 g/m² auf. Obwohl die kohlenstoffgeträgerten Silberkatalysatoren grundsätzlich haltbarer sind als die entsprechenden Platin-Katalysatoren, ist ihre Langzeitstabilität unter den Bedingungen der Chlor-Alkali-Elektrolyse jedoch immer noch beschränkt.

Die Aufgabe der vorliegenden Erfindung besteht darin, eine Sauerstoffverzehrelektrode (SVE), insbesondere für den Einsatz in der Chloralkali-Elektrolyse, bereitzustellen, in der Silberoxid einsetzt wird, welches eine niedrigere Betriebsspannung bei Einsatz der SVE in der Chloralkali-Elektrolyse ermöglicht und durch deren Herstellungsprozess die vorstehend beschriebenen Nachteile der aus dem Stand der Technik bekannten SVE überwunden werden.

Überraschenderweise wurde gefunden, dass ein Silberoxid zu geringerer Zellspannung bei der Chloralkali-Elektrolyse führt, das hergestellt ist beispielsweise nach folgenden Schritten
(1) Fällung von Silberoxid, indem in eine Vorlage einer alkalischen Lösung, insbesondere einer wässrigen NaOH-Lösung, eine Silbersalzlösung, bevorzugt eine Silbernitrat-Lösung zugegeben wird, wobei die Dosierzeit hierbei bevorzugt weniger als 10 min, besonders bevorzugt weniger als 1 min beträgt. Anschließend wird die Suspension über einen Zeitraum von höchstens 10 min bevorzugt höchstens 5 min gerührt, bei einer Temperatur von höchstens 50°C und wenigstens 10°C, bevorzugt 25 bis 30°C,
(2) Filtrieren der Suspension und Waschen des Filterkuchens, (dieser Schritt wird mehrmals wiederholt, mindestens 1 mal. Nach dem letzten Waschen wird die Suspension noch einmal filtriert),
(3) Trocknung des Silberoxids, wobei das Silberoxid zunächst bei einer Temperatur im Bereich von 80 bis 200°C, bevorzugt bei 100 bis 120°C, insbesondere über bis zu 10 h Stunden, bevorzugt höchstens 5 h getrocknet, anschließend das Silberoxid mechanisch zerkleinert wird, um Agglomerate aufzulösen, und nochmals getrocknet wird, wiederum bei einer Temperatur im Bereich von 80 bis 200°C, bevorzugt bei 100 bis 120°C, über höchstens 2 h, bevorzugt höchstens 1 h getrocknet wird und dann das entstandene Silberoxid wenigstens mit einem elektrisch leitenden Trägermaterial, Silberkatalysator und einem fluorhaltigen Polymer zu einer SVE verarbeitet wird.

Gegenstand der Erfindung ist daher ein Verfahren zur Herstellung einer Sauerstoffverzehrelektrode nach Anspruch 1.

Das Silberoxid weist bevorzugt nach der Trocknung gemäß Schritt c) eine BET-Oberfläche im Bereich von 0,6 bis 0,65 m²/g auf.

Das Silberoxid weist bevorzugt nach der Trocknung gemäß Schritt c) einen d50 Wert im Bereich von 2 bis 7 µm, besonders bevorzugt im Bereich von 3 bis 5 µm auf.

Bevorzugt wird das Alkalihydroxid der Alkalilauge in Schritt a) im molaren Überschuss zum Silbersalz eingesetzt. Besonders bevorzugt beträgt das molare Verhältnis mindestens 1,1 zu 1.

Offenbart ist auch eine Sauerstoffverzehrelektrode, wenigstens umfassend einen elektrisch leitenden Träger, eine elektrische Kontaktstelle und eine Gasdiffusionsschicht mit einer katalytisch aktiven Komponente, wobei die Gasdiffusionsschicht mindestens ein fluorhaltiges Polymer, Silber in Form von Silberpartikeln und Silberoxid in Form von Silberoxidpartikeln aufweist, hergestellt nach dem erfindungsgemäßen Verfahren. Hierbei und im Nachfolgenden bedeutet der d50-Wert, den Durchmesser einer volumenbasierten Partikelgrößenverteilung unterhalb dem 50% aller gemessenen Partikel einer Partikelgrößenverteilung liegen. Typischerweise wird die Partikelgrößenverteilung mittels eines Laserbeugungsspektrometers bestimmt (z.B. MS 2000 Hydro S). Bei der Messung liegt das Pulver typischerweise in Wasser dispergiert unter Einsatz eines Tensids, z.B. Tween 80, vor. die Dispersion wird typischerweise mittels einer Ultraschallbehandlung von 15 bis 300 s Dauer durchgeführt.

Des Weiteren bedeutet hierbei und im Nachfolgenden BET-Oberfläche, die spezifische Oberfläche eines Feststoffes gemessen nach DIN ISO 9277 in m²/g.

Eine weitere besonders bevorzugte Ausführung des neuen Verfahrens ist dadurch gekennzeichnet, dass bei der Weiterverarbeitung d) 0,5 bis 20 Gewichtsteile, bevorzugt 2 bis 10 Gewichtsteile des fluorhaltigen Polymers, 1 bis 20 Gewichtsteile, bevorzugt 2 bis 10 Gewichtsteile Silber in Form von Silberpartikeln und 60 bis 98,5 Gewichtsteile, bevorzugt 70 bis 95 Gewichtsteile Silberoxid in Form von Silberoxidpartikeln eingesetzt werden.

Bevorzugt wird ungeträgertes Silber als Katalysator eingesetzt. Bei SVE mit Katalysatoren aus ungeträgertem metallischem Silber treten naturgemäß keine Stabilitätsprobleme durch Zersetzung des Katalysatorträgers auf.

Bei der Herstellung von SVE mit ungeträgertem Silber-Katalysator wird das Silber bevorzugt zumindest teilweise in Form von Silberoxiden eingebracht, welche dann zu metallischem Silber reduziert werden. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur.

Bei der Fertigung von Sauerstoffverzehrelektroden mit Silber-Katalysator kann man prinzipiell zwischen trockenen und nassen Fertigungsverfahren unterscheiden.

Bei den trockenen Verfahren wird ein Gemisch aus Katalysator und polymerer Komponente (meistens PTFE) zu feinen Partikeln gemahlen, welche anschließend auf ein elektrisch leitendes Trägerelement verteilt und bei Raumtemperatur verpresst werden. Ein solches Verfahren ist beispielsweise in EP 1728896 A2 beschrieben.

Bei den nassen Fertigungsverfahren wird entweder eine Paste oder eine Suspension bestehend aus Katalysator und polymerer Komponente in Wasser oder einer anderen Flüssigkeit verwendet. Bei der Herstellung der Suspension können oberflächenaktive Substanzen zugegeben werden, um deren Stabilität zu erhöhen. Eine Paste wird anschließend über Siebdruck oder Kalandrieren auf den Träger aufgebracht, während die weniger viskose Suspension üblicherweise aufgesprüht wird. Der Träger mit der aufgebrachten Paste bzw. Suspension wird getrocknet und gesintert. Die Sinterung erfolgt bei Temperaturen im Bereich des Schmelzpunktes des Polymers. Weiterhin kann eine Verdichtung der SVK nach dem Sintern auch bei höherer Temperatur (bis zum Schmelzpunkt, Erweichungs- oder Zersetzungspunkt des Polymers) als Raumtemperatur erfolgen.

Die nach diesen Verfahren hergestellten Elektroden werden ohne vorherige Reduktion der Silberoxide in den Elektrolyseur eingebaut. Die Reduktion der Silberoxide zu metallischem Silber erfolgt nach Befüllen des Elektroyseurs mit den Elektrolyten unter Einwirkung des Elektrolysestroms.

Verschiedene Veröffentlichungen beschreiben die Herstellung von Silberoxid auf Basis einer Fällung unter Einsatz von Silbernitrat und Natronlauge. US7771872B2 beschreibt beispielsweise die Herstellung und Verwendung von Silberoxid-Pulvern für Knopfzellen. Das Verfahren besteht hierbei im Wesentlichen aus 4 Schritten, der Fällung unter Mischung von wässrigen Lösungen eines Silbernitrats und Natronlauge mit einer langen Nachrührzeit von mindestens 30 min (im Falle des Beispiels mit der besten Leistungsfähigkeit sogar 12h), der Filtration dieser Suspension und der anschließenden Trocknung unter Temperatur und Vakuum. Die so hergestellten Pulver hatten d50-Werte zwischen 1 und 500 µm und eine BET-Oberfläche kleiner als 5 m²/g. Nachteil dieses Herstellprozesses ist eine extrem lange Nachrührzeit, die in einem Herstellprozess im Industriemaßstab die Herstellzeiten erheblich verlängert. Weiterer Nachteil ist, dass in einer solchen langen Nachrührzeit einzelne Partikel lange wachsen können, was zu Partikeln mit hohem Durchmesser führen kann, die bei der anschließenden Weiterverarbeitung in z.B. einem Herstellprozess einer SVE, wie beschrieben in DE10148599, zu einer ungleichmäßigen Elektrodenstruktur führen kann.

In US20050050990 werden unterschiedliche Verfahren zur Herstellung von feinen SilberoxidPartikeln beschrieben, bei denen entweder ein Dispersionsmittel während der Fällung zugegeben wird oder Natronlauge und Silbernitrat-Lösung für die Fällung simultan in eine Natronlauge-Vorlage dosiert werden. Hierbei werden die Pulver nach der Fällung, Filtration und Trocknung noch einer Nassmahlung unterzogen. Hierbei werden Silberoxid-Partikel erzeugt deren d50-Wert unterhalb von 3 µm und deren d90-Wert unterhalb von 8 µm liegen mit einer BET-Oberfläche oberhalb von 0,9 m²/g. Beide erwähnte Verfahren enthalten Nachteile gegenüber dem in diesem Patent beschriebenen Verfahren. Im ersten Verfahren wird zusätzlich ein Dispersionsmittel zugegeben, welches anschließend wieder entfernt werden muss, im zweiten Verfahren muss die Dosierung der beiden Lösungen simultan verlaufen, was einem erhöhten Dosieraufwand entspricht. Weiterhin ist mit dem Nassmahlverfahren noch ein weiterer Verfahrensschritt enthalten.

In einer besonders vorteilhaften Ausführung der Erfindung ist das neue Verfahren so gestaltet, dass bei der Weiterverarbeitung d) das Trockenherstellungsverfahren, insbesondere durch Verpressen einer pulverförmigen Mischung von Silberoxid, einem Silberpartikel enthaltenden Katalysator und einem feinteiligen fluorhaltigen Polymeren mit einem elektrisch leitenden Trägermaterial zu einer flächigen Sauerstoffverzehrelektrode, angewendet wird.

Offenbart ist auch eine Sauerstoffverzehrelektrode, wenigstens umfassend einen elektrisch leitenden Träger, eine elektrische Kontaktstelle und eine Gasdiffusionsschicht mit einer katalytisch aktiven Komponente, wobei die Gasdiffusionsschicht mindestens ein fluorhaltiges Polymer, Silber in Form von Silberpartikeln und Silberoxid in Form von Silberoxidpartikeln, hergestellt nach dem neuen oben beschriebenen erfindungsgemäßen Verfahren.

Bevorzugt umfasst die Beschichtung 0,5 bis 20 Gewichtsteile, bevorzugt 2 bis 10 Gewichtsteile des fluorhaltigen Polymers, 1 bis 20 Gewichtsteile, bevorzugt 2 bis 10 Gewichtsteile Silber in Form von Silberpartikeln und 60 bis 98,5 Gewichtsteile, bevorzugt 70 bis 95 Gewichtsteile Silberoxid in Form von Silberoxidpartikeln.

Die Herstellung des silberoxidhaltigen SVE erfolgt z. B. mit den an sich bekannten Techniken im Nass- oder Trockenherstellungsverfahren. Diese erfolgen insbesondere wie weiter oben beschrieben.

Die Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid. Offenbart ist folglich auch eine Elektrolysevorrichtung, insbesondere für die Chloralkalielektrolyse, aufweisend eine zuvor beschriebene Sauerstoffverzehrelektrode als Sauerstoff verzehrende Kathode.

Alternativ kann die Sauerstoffverzehrelektrode bevorzugt als Kathode in einer Brennstoffzelle geschaltet werden.

Offenbart ist daher die Verwendung der Sauerstoffverzehrelektrode zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiCl, KCl oder NaCl.

Die neue SVE wird besonders bevorzugt bei der Chlor-Alkali-Elektrolyse und hier insbesondere bei der Natriumchlorid-(NaCl)-Elektrolyse eingesetzt.

Offenbart ist daher weiterhin auch eine Elektrolysezelle für die Elektrolyse von Alkalichloriden, bevorzugt von Natriumchlorid oder Kaliumchlorid, besonders bevorzugt von Natriumchlorid, dadurch gekennzeichnet, dass sie eine Sauerstoffverzehrelektrode wie zuvor beschrieben als Kathode enthält.

Die Erfindung wird nachfolgend anhand der Beispiele, welche jedoch keine Beschränkung der Erfindung darstellen, näher erläutert.

### Beispiele

### Beispiel 1

160 g NaOH werden in deionisiertem Wasser gelöst und zu 1,3 l Natronlauge aufgefüllt. Anschließend werden 499 g Silbernitrat (AGFA, technisch, Sackware) ebenfalls mit deionisiertem Wasser gelöst und auf 1,3 l Silbernitrat-Lösung aufgefüllt. In einem 5 l Becherglas wir bei Raumtemperatur die Natronlauge unter Rühren (Blattrührer, VA Rührblatt 150 U/min) vorgelegt und die Silbernitratlösung innerhalb von 20 s und einer Rührzahl von 250 U/min zugegeben. Anschließend wird für 5 min nachgerührt.
Die Suspension wird anschließend für 10 min über einen Weißbandfilter auf einer Porzellannutsche filtriert. Der Filterkuchen wird noch fünfmal mit je einem halben Liter deionisiertem Wasser auf der Nutsche gewaschen. Danach wird der gesamte Filterkuchen in 3 l deionisiertem Wasser aufgeschlämmt, auf einem neuen Weißbandfilter filtriert und dreimal mit jeweils einem halben Liter deioinisiertem Wasser auf der Nutsche gewaschen.
Der Filterkuchen wird in einem Vakuumtrockenschrank für 5 h bei 120°C getrocknet. Anschließend werden größere Agglomerate mechanisch zerstört (zerdrückt) und der Filterkuchen nochmals für 1 h bei 120°C im Vakuumtrockenschrank getrocknet.

Für das so hergestellte Silber-I-Oxid wurde mittels BET-Messung eine spezifische BET-Oberfläche von 0,63 m²/g gemessen. Über die Bestimmung einer Partikelgrößenverteilung mittels Laserbeung in einem MS 2000 Hydro S, nach einer Ultraschall-Vorbehandlung in einem Wasser/Tween 80-Gemisch der Silber-I-Oxid-Probe für 300 s, wurde für dieses Silber-I-Oxid ein d50-Wert von 3,97 µm ermittelt.

0,16 kg einer Pulvermischung, bestehend aus 7 Gew.-% PTFE-Pulver Dyneon Typ TF2053Z, 86 Gew.-% Silber-I- Oxid, hergestellt nach obigem Herstellprozess und 7 Gew.-% Silberpulver des Typs 331 der Fa. Ferro wurden in einem Mischer der Fa. IKA 4 mal für je 15 s gemischt. Die Temperatur der Pulvermischung blieb während des Vorgangs unter 50°C. Nach dem Mischen wurde die Pulvermischung mit einer Maschenweite von 1,0 mm gesiebt.

Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,26 kN/cm verpresst. Der Walzenpresse wurde die Sauerstoffverzehrelektrode entnommen.

Die so hergestellte Sauerstoffverzehrelektrode wurde bei der Elektrolyse einer NatriumchloridLösung (Konzentration von 210 g/l) mit einer Ionenaustauschermembran von DuPONT N982WX und einem Natronlaugespalt zwischen SVE und Membran von 3 mm eingesetzt. Die Elektrolyttemperatur betrug 90°C, die Natronlauge-Konzentration war 32 Gew.-%. Der Sauerstoff mit einer Reinheit von 99,5% wurde auf der dem Natronlaugespalt abgewandten Seite der SVE zudosiert. Als Anode wurde ein Streckmetall aus Titan beschichtet mit Ruthenium enthaltendem Edelmetallmischoxid (Hersteller: De Nora, Typ LZM) eingesetzt. Die aktiven Elektrodengrundflächen sowie auch die Membrangrundfläche betrugen jeweils 100 cm². Der Natronlauge-Durchfluss und der Sole Durchfluss lagen jeweils zwischen 5 und 10 l/h und der Sauerstoff-Durchfluss lag zwischen 45 und 55 l/h.

Bei einer Stromdichte von 4 kA/m² wurde eine Zellspannung von 2,02 V gemessen.

## Patentansprüche

1. Verfahren zur Herstellung einer Sauerstoffverzehrelektrode mit den Schritten:
a) Fällung von Silberoxid, indem in eine Vorlage einer alkalischen Lösung, insbesondere einer wässrigen NaOH-Lösung, eine Silbersalzlösung, bevorzugt eine Silbernitrat-Lösung zugegeben wird, wobei die Dosierzeit hierbei weniger als 10 min, bevorzugt weniger als 1 min beträgt, anschließend die Suspension über einen Zeitraum von höchstens 10 min, bevorzugt höchstens 5 min gerührt wird, wobei die Temperatur der Suspension in einem Bereich von 10°C bis 50°C bevorzugt von 25°C bis 30°C gehalten wird,
b) Abtrennen des gefällten Silberoxids aus Schritt a) von der Suspension, insbesondere durch ein- oder mehrfaches Filtrieren der Suspension und Waschen des Silberoxids,
c) Trocknung des Silberoxids bei einer Temperatur im Bereich von 80°C bis 200°C gegebenenfalls bei vermindertem Druck, wobei das Silberoxid nach der Trocknung gemäß Schritt c) eine BET-Oberfläche, gemessen nach DIN ISO 9277, im Bereich von 0,4 bis 0,7 m²/g aufweist,
d) Weiterverarbeitung des entstandenen Silberoxids mit einem elektrisch leitenden Trägermaterial, einem Silberpartikel enthaltenden Katalysator und einem feinteiligen fluorhaltigen Polymeren zu einer flächigen Sauerstoffverzehrelektrode.

2. Verfahren nach Anspruch 1, **dadurch gekennzeichnet, dass** das Silberoxid nach der Trocknung gemäß Schritt c) eine BET-Oberfläche, gemessen nach DIN ISO 9277, im Bereich von 0,6 bis 0,65 m²/g aufweist.

3. Verfahren nach Anspruch 1 oder 2, **dadurch gekennzeichnet, dass** das Silberoxid nach der Trocknung gemäß Schritt c) einen d50 Wert, d.h. einen Durchmesser einer volumenbasierten Partikelgrößenverteilung unterhalb dem 50% aller gemessenen Partikel einer mittels Laserbeugungsspektrometer bestimmten Partikelgrößenverteilung liegen, im Bereich von 2 bis 7 µm, bevorzugt im Bereich von 3 bis 5 µm aufweist.

4. Verfahren nach einem der Ansprüche 1 bis 3, **dadurch gekennzeichnet, dass** bei der Weiterverarbeitung d) 0,5 bis 20 Gewichtsteile, bevorzugt 2 bis 10 Gewichtsteile des fluorhaltigen Polymers, 1 bis 20 Gewichtsteile, bevorzugt 2 bis 10 Gewichtsteile Silber in Form von Silberpartikeln und 60 bis 98,5 Gewichtsteile, bevorzugt 70 bis 95 Gewichtsteile Silberoxid in Form von Silberoxidpartikeln eingesetzt werden.

5. Verfahren nach einem der Ansprüche 1 bis 4, **dadurch gekennzeichnet, dass** bei der Weiterverarbeitung d) das Trockenherstellungsverfahren, insbesondere durch Verpressen einer pulverförmigen Mischung von Silberoxid, einem Silberpartikel enthaltenden Katalysator und einem feinteiligen fluorhaltigen Polymeren mit einem elektrisch leitenden Trägermaterial zu einer flächigen Sauerstoffverzehrelektrode, angewendet wird.

6. Verfahren nach einem der Ansprüche 1 bis 5, **dadurch gekennzeichnet, dass** die alkalische Lösung eine Alkalilauge ist, und das Alkalihydroxid der Alkalilauge in Schritt a) im molaren Überschuss zum Silbersalz eingesetzt wird.

7. Verfahren nach Anspruch 6, **dadurch gekennzeichnet, dass** das Verhältnis von Alkalihydroxid der Alkalilauge im molaren Überschuss zum Silbersalz mindestens 1,1 zu 1 beträgt.

## Claims

1. Process for producing an oxygen-consuming electrode, comprising the steps of:
a) precipitating silver oxide by adding a silver salt solution, preferably a silver nitrate solution, to an initial charge of an alkaline solution, especially of an aqueous NaOH solution, the metering time here being less than 10 min, preferably less than 1 min, then stirring the suspension over a period of at most 10 min, preferably at most 5 min, in the course of which the temperature of the suspension is kept within a range from 10°C to 50°C, preferably from 25°C to 30°C,
b) removing the precipitated silver oxide from step a) from the suspension, more particularly by once or more than once filtering the suspension and washing the silver oxide,
c) drying the silver oxide at a temperature in the range from 80°C to 200°C, optionally under reduced pressure, wherein the silver oxide after the drying in step c) has a BET surface area, measured to DIN ISO 9277, in the range from 0.4 to 0.7 m²/g,
d) further processing the resulting silver oxide with an electrically conductive support material, a catalyst comprising silver particles, and a finely divided fluorinated polymer to give a flat oxygen-consuming electrode.

2. Process according to Claim 1, **characterized in that** the silver oxide after the drying in step c) has a BET surface area, measured to DIN ISO 9277, in the range from 0.6 to 0.65 m²/g.

3. Process according to Claim 1 or 2, **characterized in that** the silver oxide after the drying in step c) has a d50, that is to say a diameter of a volume-based particle size distribution below which 50% of all measured particle diameters of a particle size distribution determined by means of a laser diffraction spectrometer lie, in the range from 2 to 7 µm, especially within the range from 3 to 5 µm.

4. Process according to any of Claims 1 to 3, **characterized in that**, in the further processing step d), 0.5 to 20 parts by weight and preferably 2 to 10 parts by weight of the fluorinated polymer, 1 to 20 parts by weight and preferably 2 to 10 parts by weight of silver in the form of silver particles, and 60 to 98.5 parts by weight and preferably 70 to 95 parts by weight of silver oxide in the form of silver oxide particles are used.

5. Process according to any of Claims 1 to 4, **characterized in that**, in the further processing step d), the dry production process is employed, more particularly by pressing a pulverulent mixture of silver oxide, a catalyst comprising silver particles, and a finely divided fluorinated polymer with an electrically conductive support material to give a flat oxygen-consuming electrode.

6. Process according to any of Claims 1 to 5, **characterized in that** the alkaline solution is an alkali metal hydroxide solution and the alkali metal hydroxide in the alkali metal hydroxide solution is used in step a) in a molar excess relative to the silver salt.

7. Process according to Claim 6, **characterized in that** the ratio of alkali metal hydroxide in the alkali metal hydroxide solution in a molar excess relative to the silver salt is at least 1.1 to 1.

## Revendications

1. Procédé de fabrication d'une électrode à consommation d'oxygène, comprenant les étapes :
a) précipitation d'oxyde d'argent, par introduction, dans un ballon contenant une solution alcaline, en particulier une solution aqueuse de NaOH, d'une solution d'un sel d'argent, de préférence une solution de nitrate d'argent, la durée de l'introduction étant alors inférieure à 10 min, de préférence inférieure à 1 min, la suspension étant ensuite agitée pendant un laps de temps d'au plus 10 min, de préférence d'au plus 5 min, la température de la suspension étant maintenue dans la plage de 10°C à 50°C, de préférence de 25°C à 30°C,
b) séparation, de la solution, de l'oxyde d'argent précipité obtenu dans l'étape a), en particulier par une ou plusieurs filtrations de la suspension et lavages de l'oxyde d'argent,
c) séchage de l'oxyde d'argent à une température comprise dans la plage de 80°C à 200°C, éventuellement sous pression réduite, l'oxyde d'argent présentant, après le séchage selon l'étape c), une aire BET mesurée selon DIN ISO 9277 comprise dans la plage de 0,4 à 0,7 m²/g,
d) traitement subséquent de l'oxyde d'argent obtenu, à l'aide d'un matériau support conducteur de l'électricité, d'un catalyseur contenant des particules d'argent et d'un polymère fluoré finement divisé, pour obtenir une électrode plane consommatrice d'oxygène.

2. Procédé selon la revendication 1, **caractérisé en ce que** l'oxyde d'argent présente, après le séchage selon l'étape c), une aire BET, mesurée selon DIN ISO 9277, comprise dans la plage de 0,6 à 0,65 m²/g.

3. Procédé selon la revendication 1 ou 2, **caractérisé en ce que** l'oxyde d'argent présente, après le séchage selon l'étape c), une valeur d50, c'est-à-dire un diamètre d'une distribution granulométrique en volume inférieure à 50 % de l'ensemble des particules mesurées d'une distribution granulométrique déterminée par un spectromètre à diffraction laser, comprise dans la plage de 2 à 7 µm, de préférence dans la plage de 3 à 5 µm.

4. Procédé selon l'une des revendications 1 à 3, **caractérisé en ce que**, lors du traitement subséquent d), on utilise 0,5 à 20 parties en poids, de préférence 2 à 10 parties en poids du polymère fluoré, 1 à 20 parties en poids, de préférence 2 à 10 parties en poids d'argent sous forme de particules d'argent, et 60 à 98,5 parties en poids, de préférence 70 à 95 parties en poids, d'oxyde d'argent sous forme de particules d'oxyde d'argent.

5. Procédé selon l'une des revendications 1 à 4, **caractérisé en ce que**, lors du traitement subséquent d), on utilise le procédé de fabrication à sec, en particulier par compression d'un mélange pulvérulent d'oxyde d'argent, d'un catalyseur contenant des particules d'argent et d'un polymère fluoré finement divisé, avec un matériau support conducteur de l'électricité, pour obtenir une électrode plane consommatrice d'oxygène.

6. Procédé selon l'une des revendications 1 à 5, **caractérisé en ce que** la solution alcaline est une lessive alcaline, et l'hydroxyde d'un métal alcalin de la lessive alcaline est, dans l'étape a), utilisé selon un excès molaire par rapport au sel d'argent.

7. Procédé selon la revendication 6, **caractérisé en ce que** le rapport de l'hydroxyde d'un métal alcalin à la lessive alcaline en excès molaire par rapport au sel d'argent est d'au moins 1,1 à 1.
